# EUROPÄISCHE PATENTANMELDUNG

(11) **EP 2 963 378 A1**
(43) Veröffentlichungstag der Anmeldung: **06.01.2016**
(21) Anmeldenummer: 15474001.3
(22) Anmeldetag: 25.05.2015
(51) Int. Cl.: G01B 3/30

(54) **FÜHLERLEHRE**

(30) Priorität: 04.07.2014 SK 50332014
(71) Anmelder: Královic, Tibor, 91924 (SK)
(72) Erfinder: Královic, Tibor, 91924 (SK)

(57) **Zusammenfassung**

Sternförmige Fühlerlehre (1) mit runder oder mehreckiger Öffnung (5) in der Mitte, mit kantigen oder abgerundeten Spitzen (2) im Umfang von 3 bis 10 Spitzen, mit ein- bis zweistufig abgeschnittene kleine Flächen (4) zur Messung von Fugen und Spalten mit numerischer Kennzeichnung an der jeweiligen Spitze (3).

## Beschreibung

### Bereich Technik

Die Erfindung betrifft eine Fühlerlehre, sternförmig, mit einer runden oder mehrkantigen Öffnung in der Mitte, mit kantigen oder abgerundeten Messspitzen, die im Karosseriebau zum genauen Messen von Fugen und Spalten vor allem in der Automobil-, Maschinenbau-, Möbel- und Konsumgüterindustrie bestimmt sind, wo der Erhalt der Gleichartigkeit und Gleichförmigkeit von Fugen und Spalten notwendig ist. Ebenso sind sie als Mess- und Einstellungs-(Begrenzungs-)Elemente bei der Montage hauptsächlich in der Automobil-, Maschinenbau-, Möbel- und Konsumgüterindustrie bestimmt sind.

### Der bisherige Stand der Technik

Zur genauen Messen von Fugen wurden bisher nur Hilfsmittel verwendet, die nicht in einem kompakten Ganzen integriert waren, also im realen Produktionsprozess keine Gleichartigkeit und Gleichmäßigkeit von Fugen und Spalten garantiert haben. Sie wurden/werden aus Materialien hergestellt, die eine Beschädigung von Gegenständen oder deren äußere Oberflächenbehandlung beschädigen.

Das Ziel der Erfindung besteht darin, durch einen kompakten Gegenstand - die Fühlerlehre - die Genauigkeit der Messung von Fugen und Spalten ohne jegliche Beschädigung die Gleichartigkeit und Gleichmäßigkeit von Fugen und Spalten und durch Transparenz die Wiederholbarkeit mit der Wahl der bezeichneten Messspitzen zu garantieren.

### Prinzip der Erfindung

Die sternförmige Fühlerlehre besteht aus 3 bis 10 Messspitzen, die ein bis zwei (ggf. drei) definierte Maße enthalten, mit einer numerischen übersichtlichen Kennzeichnung, in der Mitte mit einer runden oder mehrkantigen Öffnung, kann so beschrieben werden, dass sie durch ihr kompaktes Ganzes und das weiche, flexible Material eine genaue, gleichmäßige, gleiche und wiederholbare Messung von Fugen und Spalten ohne irgendeine Möglichkeit einer Beschädigung des Gegenstandes, an dem die Messung erfolgt, einschließlich dessen äußerer Oberflächenbehandlung.

Der Vorteil der Erfindung besteht in der komfortablen, einfachen, schnellen, genauen und wiederholbaren Messung von Fugen und Spalten ohne irgendeine minimale Beschädigung des Messgegenstandes.

### Übersicht der auf den Plänen befindlichen Bilder

Die Erfindung ist auf den angefügten Plänen näher dargestellt, wobei:
Bild 1 - eine sternförmige Fühlerlehre mit einer runden Öffnung in der Mitte und 8 abgerundeten Spitzen darstellt;
Bild 1a - eine sternförmige Fühlerlehre mit einer runden Öffnung in der Mitte und 8 abgerundeten Spitzen in dimetrischer Ansicht darstellt;
Bild 1b - eine sternförmige Fühlerlehre mit einer runden Öffnung in der Mitte und 8 kantigen Spitzen darstellt;
Bild 1c - eine sternförmige Fühlerlehre mit einer runden Öffnung in der Mitte und 8 kantigen Spitzen in dimetrischer Ansicht darstellt;
Bild 2 - eine sternförmige Fühlerlehre mit einer 6-eckigen Öffnung in der Mitte und 3 abgerundeten Spitzen darstellt;
Bild 2a - eine sternförmige Fühlerlehre mit einer 6-eckigen Öffnung in der Mitte und 3 abgerundeten Spitzen in dimetrischer Ansicht darstellt;
Bild 3 - eine sternförmige Fühlerlehre mit einer 10-eckigen Öffnung in der Mitte und 10 abgerundeten Spitzen darstellt;
Bild 3a - eine sternförmige Fühlerlehre mit einer 10-eckigen Öffnung in der Mitte und 10 abgerundeten Spitzen in dimetrischer Ansicht darstellt;
Bild 4 - eine sternförmige Fühlerlehre mit einer runden Öffnung in der Mitte und 6 abgerundeten Spitzen darstellt;
Bild 4a - eine sternförmige Fühlerlehre mit einer runden Öffnung in der Mitte und 6 abgerundeten Spitzen in dimetrischer Ansicht darstellt;
Bild 5 - eine sternförmige Fühlerlehre mit einer runden Öffnung in der Mitte und 8 kantigen Spitzen darstellt;
Bild 5a - eine sternförmige Fühlerlehre mit einer runden Öffnung in der Mitte und 8 kantigen Spitzen in dimetrischer Ansicht darstellt;

### Beispiele für die Umsetzung

### Beispiel 1

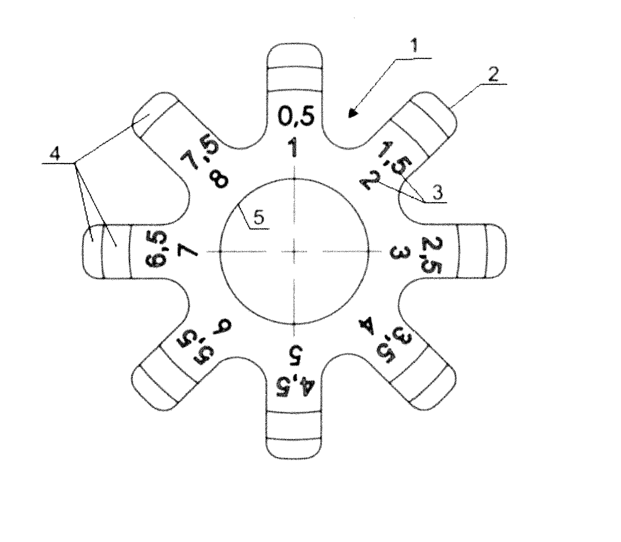

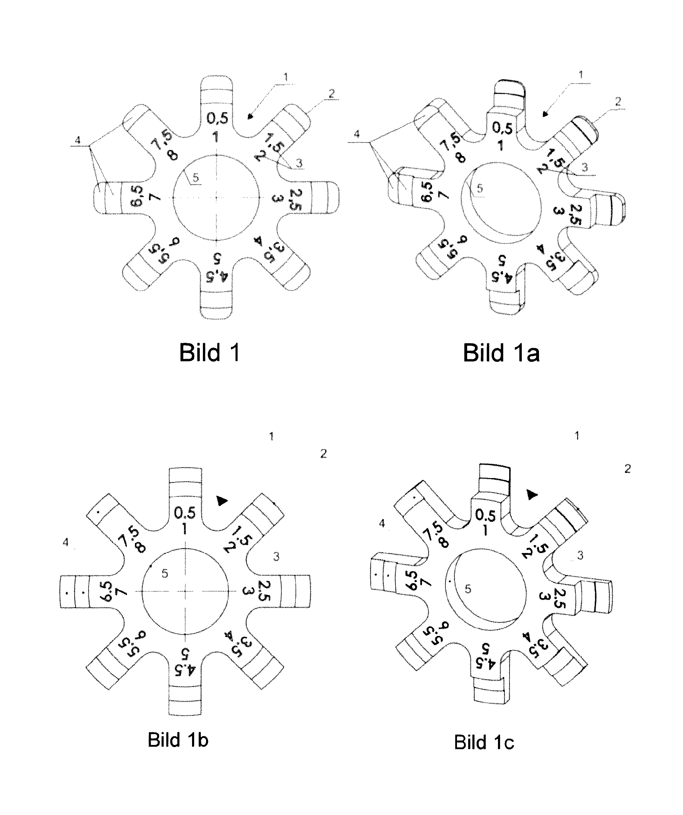

Die in Bild 1 dargestellte Fühlerlehre 1 besteht aus einem sternförmigen kompakten Ganzen mit einer runden Öffnung in der Mitte 5 (Bild 1a) und ist aus widerstandsfähigem flexiblem Kunststoff hergestellt. Die sternförmige Fühlerlehre 1 besteht aus 8 Spitzen (Segmenten), die eckig (Bild 1b, Bild 1c) oder bogenförmig abgeschlossen sind 2 (Bild 1, Bild 1a). Die einzelnen Spitzen (Segmente) der Fühlerlehre bestimmen eine, zwei, ggf. drei, definierte und numerisch gekennzeichnete kleine Flächen 4 (Maße) zur genauen Messung von Fugen und Spalten, aufsteigend in 0,5 mm Schritten (bzw. einem anderen definierten Maß) vom kleinsten Maß 0,5 mm bis zum größten Maß 8 mm. Am oberen Teil des Maßes befindet sich eine übersichtliche und große numerische Kennzeichnung 3, die die Transparenz bei der Arbeit mit der Fühlerlehre 1 erleichtert.

### Beispiel 2

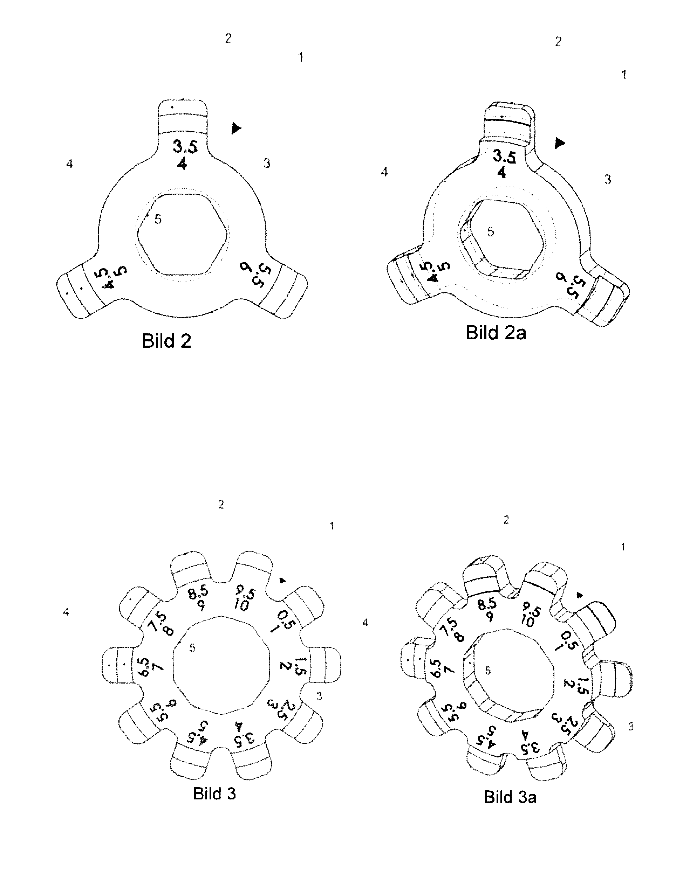

Die in Bild 2 dargestellte Fühlerlehre 1 besteht aus einem sternförmigen kompakten Ganzen mit einer 6-eckigen Öffnung in der Mitte 5 (Bild 2a) und ist aus widerstandsfähigem flexiblem Kunststoff hergestellt. Die sternförmige Fühlerlehre 1 besteht aus 3 bogenförmig abgeschlossen Spitzen (Segmenten) 2 (Bild 2). Die einzelnen Spitzen (Segmente) der Fühlerlehre bestimmen eine, zwei, ggf. drei, definierte und numerisch gekennzeichnete kleine Flächen 4 (Maße) zur genauen Messung von Fugen und Spalten, aufsteigend in 0,5 mm Schritten (bzw. einem anderen definierten Maß) vom kleinsten Maß 3,5 mm bis zum größten Maß 6 mm. Am oberen Teil des Maßes befindet sich eine übersichtliche und große numerische Kennzeichnung 3, die die Transparenz bei der Arbeit mit der Fühlerlehre 1 erleichtert.

### Beispiel 3

Die in Bild 3 dargestellte Fühlerlehre 1 besteht aus einem sternförmigen kompakten Ganzen mit einer 10-eckigen Öffnung in der Mitte 5 (Bild 3a) und ist aus widerstandsfähigem flexiblem Kunststoff hergestellt. Die sternförmige Fühlerlehre 1 besteht aus 10 bogenförmig abgeschlossen Spitzen (Segmenten) 2. Die einzelnen Spitzen (Segmente) der Fühlerlehre bestimmen eine, zwei, ggf. drei, definierte und numerisch gekennzeichnete kleine Flächen 4 (Maße) zur genauen Messung von Fugen und Spalten, aufsteigend in 0,5 mm Schritten (bzw. einem anderen definierten Maß) vom kleinsten Maß 0,5 mm bis zum größten Maß 10 mm. Am oberen Teil des Maßes befindet sich eine übersichtliche und große numerische Kennzeichnung 3, die die Transparenz bei der Arbeit mit der Fühlerlehre 1 erleichtert.

### Beispiel 4

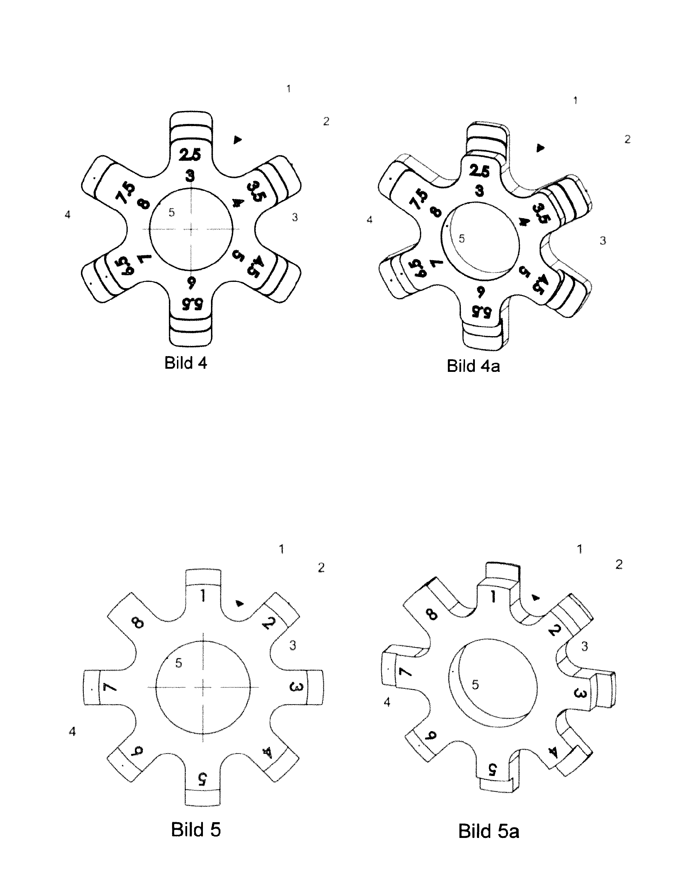

Die in Bild 4 dargestellte Fühlerlehre 1 besteht aus einem sternförmigen kompakten Ganzen mit einer runden Öffnung in der Mitte 5 (Bild 4a) und ist aus widerstandsfähigem flexiblem Kunststoff hergestellt. Die sternförmige Führerlehre 1 besteht aus 6) bogenförmig abgeschlossen Spitzen (Segmenten) 2 (Bild 4a). Die einzelnen Spitzen (Segmente) der Fühlerlehre bestimmen eine, zwei, ggf. drei, definierte und numerisch gekennzeichnete kleine Flächen 4 (Maße) zur genauen Messung von Fugen und Spalten, aufsteigend in 0,5 mm Schritten (bzw. einem anderen definierten Maß) vom kleinsten Maß 2,5 mm bis zum größten Maß 8 mm. Am oberen Teil des Maßes befindet sich eine übersichtliche und große numerische Kennzeichnung 3, die die Transparenz bei der Arbeit mit der Fühlerlehre 1 erleichtert.

### Beispiel 5

Die in Bild 5 dargestellte Fühlerlehre 1 besteht aus einem sternförmigen kompakten Ganzen mit einer runden Öffnung in der Mitte 5 (Bild 5a) und ist aus widerstandsfähigem flexiblem Kunststoff hergestellt. Die sternförmige Fühlerlehre 1 besteht aus 8 Spitzen (Segmenten), die eckig abgeschlossen sind 2 (Bild5, Bild 5a). Die einzelnen Spitzen (Segmente) der Fühlerlehre bestimmen eine, zwei, ggf. drei, definierte und numerisch gekennzeichnete kleine Flächen 4 (Maße) zur genauen Messung von Fugen und Spalten, aufsteigend in 1 mm Schritten (bzw. einem anderen definierten Maß) vom kleinsten Maß 1 mm bis zum größten Maß 8 mm. Am oberen Teil des Maßes befindet sich eine übersichtliche und große numerische Kennzeichnung 3, die die Transparenz bei der Arbeit mit der Fühlerlehre 1 erleichtert.

## Patentansprüche

1. Die Fühlerlehre (1) **zeichnet sich dadurch aus, dass** sie aus einem sternförmigen kompakten Ganzen mit kantigen oder abgerundeten Spitzen (2) besteht, in der Mitte mit runder oder mehreckiger Öffnung (5), wobei die einzelnen Spitzen (2) der kompakten sternförmigen Form in den Schritten der kleinen Fläche (4) zur Messung von Fugen und Spalten dienen.

2. Die Fühlerlehre (1) **zeichnet sich** gemäß Anspruch 1 **dadurch aus, d a s s** die einzelnen Spitzen (2) an den Enden kantig oder abgerundet sind.

3. Die Fühlerlehre (1) **zeichnet** t **sich** gemäß Anspruch 1 **dadurch aus, d a s s** die einzelnen Spitzen (2) des Sterns in Schritten von einer bis zwei Stufen (bzw. dreistufig) abgeschnittene kleine Flächen (4) zur Messung von Fugen und Spalten dienen.

4. Die Fühlerlehre (1) **zeichnet sich** gemäß Anspruch 1 bis 3 **dadurch aus, dass** die Anzahl der einzelnen Spitzen (2) 3 bis 10 beträgt.

5. Die Fühlerlehre (1) **zeichnet sich** gemäß Anspruch 1 bis 4 **dadurch aus, dass sich** an ihrem oberen Teil sichtbar numerische Kennzeichnungen (3) befinden, die die definierten Messmaße darstellen.

6. Die Fühlerlehre (1) **zeichnet sich** gemäß Anspruch 1 bis 5 **dadurch aus, dass** die einzelnen Spitzen (2) des Sterns eine genau definierte Stärke der kleinen Flächen (4) zur Messung von Fugen und Spalten in der Schrittfolge von dem kleinsten bis zum größten Maß haben.

7. Die Fühlerlehre (1) **zeichnet sich** gemäß Anspruch 1 bis 6 **dadurch aus, dass sie** aus abriebfestem und zudem flexiblem Kunststoff hergestellt ist.
